# EUROPÄISCHE PATENTSCHRIFT

(11) **EP 1 375 131 B1**
(45) Veröffentlichungstag und Bekanntmachung des Hinweises auf die Patenterteilung: **31.01.2007**
(21) Anmeldenummer: 03012039.8
(22) Anmeldetag: 28.05.2003
(51) Int. Cl.: B32B 15/20, H01Q 1/22, G06K 19/07

(54) **Laminat mit einer als Antennenstruktur ausgebildeten elektrisch leitfähigen Schicht**
Laminat comprising an electrically conducting layer as antenna
Laminé ayant une couche conductrice servant d'antenne

(30) Priorität: 28.06.2002 DE 10229168
(43) Veröffentlichungstag der Anmeldung: 02.01.2004
(73) Patentinhaber: Qimonda AG, 81739 München (DE)
(72) Erfinder: Schmid, Günter, 91334 Hemhofen (DE); Klauk, Hagen, 70195 Stuttgart (DE); Halik, Marcus, 91058 Erlangen (DE)
(74) Vertreter: Müller - Hoffmann & Partner

(56) Entgegenhaltungen:
- EP-A- 0 083 046
- EP-A- 1 162 480
- US-A- 5 528 222
- US-A- 6 147 662

## Beschreibung

Die Erfindung betrifft ein Verfahren zur Herstellung einer Verpackung in Form eines Laminats, bestehen aus einerTrägerschicht und einer elektrisch leitfähigen Schicht. Derartige Laminate werden beispielsweise für die Herstellung von Getränkekartons verwendet.

Die Transponder-Technologie ermöglicht ein berührungsloses Auslesen und Speichern von Daten von bzw. auf einem Mikrochip. Der Mikrochip ist dazu mit einer Antenne verbunden, mit welcher die zum Beschreiben bzw. Lesen des Mikrochips erforderliche elektromagnetische Strahlung empfangen bzw. gesendet werden kann. Mit einer externen Sende- bzw. Empfangseinheit kann dann über elektromagnetische Strahlung mit dem Mikrochip kommuniziert werden. Der Mikrochip umfasst dabei im Allgemeinen keine eigene Energieversorgung, sodass die zum Beschreiben bzw. Auslesen des Mikrochips verwendete Strahlung auch zur Energieversorgung des Mikrochips verwendet wird.

Die hierfür benötigte Technologie konnte bislang nicht unter einem gewissen Kostenrahmen produziert werden. Die entsprechenden Vorrichtungen sind daher zur Zeit nur für verhältnismäßig wertvolle Artikel rentabel. So wird die Transponder-Technologie zum Beispiel zum Auffinden von vergrabenen Pipelines verwendet oder zum schnellen Erfassen von Tieren in einer Herde. So bekommen z.B. in großen Rinderherden die Tiere einen Transponder unter die Haut implantiert. Die Tiere können dann sehr einfach an einer Sende- bzw. Empfangsstation vorbeigetrieben werden, an der die auf dem Mikrochip gespeicherten Daten berührungslos ausgelesen werden, um das Tier z.B. zu identifizieren. Ein weiteres Anwendungsgebiet ist die elektronische Diebstahlsicherung von teueren Luxusgütern, wie Pelzmänteln, Parfums, CD-ROMs etc. Dazu muss der Einzelhandel jedoch mit entsprechenden Einrichtungen zum Auslesen der Mikrochips ausgestattet sein.

Weitere Anwendungen sind z.B. die Überwachung wichtiger Dokumente und Akten in Regierungs- oder Verwaltungsgebäuden, wobei die Akte an den einzelnen Bearbeitungsstationen elektronisch erfasst wird, um ihren Weg leichter verfolgen zu können, bzw. um die Akte leicht wieder auffinden zu können. Dazu kann beispielsweise im Türrahmen eine Sende- und Empfangsstation angebracht werden, sodass die Akte elektronisch erfasst wird, wenn sie in das Zimmer herein- bzw. aus dem Zimmer herausgereicht wird. Ein anderes Anwendungsbeispiel ist die Verwaltung und Verladung von Gepäckstücken auf Bahnhöfen, Häfen oder Flughäfen, wobei das Gepäckstück zielgerichtet zu einem bestimmten Ort geleitet werden muss. Für diese Anwendungen gilt ein Stückpreis für ein Etikett, das einen Speicherchip sowie eine Sende- bzw. Empfangseinheit umfasst, von 0,50 Euro gerade noch als rentabel.

Bisher wurde die Transponder-Technologie vor allem für Güter eingesetzt, die sehr langlebig oder die sehr hochwertig sind. Die vergleichsweise hohen Kosten haben eine Einführung der Transponder-Technologie auf breiter Basis bisher verhindert.

Interesse an dieser Technologie besteht jedoch auf vielen Gebieten, auf denen in kurzen Zeiträumen eine Vielzahl von Daten sicher erfasst werden müssen. Beispiele sind die elektronische Briefmarke, oder die Verwendung elektronischer Etiketten im Einzelhandel, z.B. in Supermärkten. Hier können dann z.B. die in einem Einkaufswagen befindlichen Waren an einer elektronischen Kasse berührungslos erfasst und eine Rechnung erstellt werden. Die Daten über die erfassten Waren können dann z.B. für die Lagerhaltung verwendet werden.

Da diese Konsum- und Verbrauchsartikel einen Wert von lediglich einigen wenigen EURO aufweisen, müssen die Kosten für die elektronischen Etiketten erheblich gesenkt werden. In diesem Zusammenhang wird über eine minimale Kostengrenze von etwa 5 Cent pro Etikett diskutiert, die für eine marktgerechte Einführung anzustreben ist.

Um ein elektronisches Etikett preiswert herstellen zu können, müssen zum Einen die Kosten für den Mikrochip gesenkt werden, zum Anderen die Kosten für die Sende- und Empfangseinheit, wie z.B. die Antenne. Gegenwärtig werden meist Drahtspulen als Antenne verwendet. Diese Antennen sind für die oben beschriebenen Anwendungen jedoch bei weitem zu kostenaufwendig. Ferner sind auch Antennen aus Metallfolien bekannt, wobei zunächst die Antennenstruktur hergestellt wird und diese anschließend auf einen Träger aufgebracht wird. Die Antennenstruktur kann dabei auf verschiedenen Wegen hergestellt werden:
a) eine Metallfolie wird vollflächig auf den Träger laminiert und anschließend durch selektives Ätzen subtraktiv strukturiert, wie zum Beispiel in EP 1 162 480 beschrieben;
b) die Antennenstruktur wird aus einer Metallfolie ausgestanzt und anschließend auf den Träger laminiert;
c) die Antennenstruktur wird unter Verwendung elektrisch leitfähiger Pasten auf den Träger gedruckt oder gesprüht;
d) auf dem Träger wird fotolithografisch eine Maske definiert (zum Beispiel unter Verwendung eines Fotolacks); anschließend werden die nicht durch die Maske bedeckten Zwischenräume auf dem Träger stromlos metallisiert.

Bei den oben genannten Beispielen ist wesentlich, dass eine Antennenstruktur separat aus einem zweiten Laminat hergestellt wird und die Metallfolie nicht zwangsläufig Bestandteil einer Verpackung ist.

Diese Verfahren sind für die Herstellung von Antennen, die sich für die oben beschriebenen Anwendungen eignen, sämtlich zu kostenaufwendig.

Aufgabe der Erfindung ist es deshalb, ein Verfahren zur Herstellung einer Verpackung mit einer preisgünstigen Antennenstruktur zur Verfügung zu stellen, die einen Einsatz der Transponder-Technologie auch für Waren ermöglicht, die unter einem hohen Kostendruck stehen.

Diese Aufgabe wurde durch den Gegenstad des Anspruchs 1 gelöst. Die abhängigen Ansprüche 2 bis 10 beanspruchen bevorzugte Ausführungsformen.

Das erfindungsgemäße Verfahren zur Herstellung einer Verpackung in Form eines Laminats weist folgende Schritte auf :
- Auflegen einer Schattenmaske auf eine Trägerschicht;
- Aufdampfen von Aluminium auf die Trägerschicht;
- Abnehmen der Schattenmaske mit dem überschüssigen Aluminium von der Trägerschicht, sodass nur die gewünschte Antennenstruktur auf dem Abschnitt der Trägerschicht zurückbleibt;
- Aufkleben eines Mikrochip mit einem Kleber;
- Verbinden des Mikrochips mit den Enden der Antennenstruktur verbunden.

Insbesondere wird das erfindungsgemäße Verfahren zur Herstellung von Verpackungen von Lebensmitteln eingesetzt. Im Wesentlichen können die bereits bekannten Lebensmittelverpackungen, die eine Metallschicht z.B. als Sauerstoffbarriere enthalten, zu einer erfindungsgemäßen Verpackung weiterentwickelt werden, indem in der Metallschicht eine entsprechende Antennenstruktur vorgesehen wird.

Die meisten Fäulnisprozesse benötigen Sauerstoff, da es sich bei diesen Prozessen im Grunde um "stille Verbrennungen" handelt. Es ist daher vorteilhaft, insbesondere wenn das Laminat als Verpackung für ein Nahrungsmittel dient, wenn das Laminat sauerstoffundurchlässig ist. Dadurch wird eine Diffusion des in der Atmosphäre befindlichen Sauerstoffs in das Verpackungsinnere verhindert und der Verderb verlangsamt.

In einer weiteren Ausführungsform umfasst das erfindungsgemäße Laminat daher zumindest abschnittsweise eine Schicht aus einem sauerstoffundurchlässigen Material. Auf diese Weise kann der Durchtritt von Sauerstoff in das Verpackungsinnere auch in den nicht von der elektrisch leitfähigen Schicht bedeckten Abschnitten unterdrückt werden und dadurch sauerstofferfordernde, also aerobe Verderbnis- und Fäulnisprozesse verlangsamt und somit die Haltbarkeit der betreffenden Nahrungsmittel erhöht werden.

Die durch die Aussparung der Antenne nicht metallisierte Fläche ist im Vergleich zur Gesamtfläche der Verpackung äußerst gering, sodass die Qualität der Lebensmittel im Allgemeinen nicht beeinträchtigt wird. Eine Sauerstoffdiffusion durch die Aussparungen lässt sich vollständig verhindern, indem die Zwischenräume mit einem geeigneten Polymerfilm aufgefüllt werden. Alternativ kann die Sauerstoffdiffusion auch durch das Aufbringen einer Abdeckfolie auf die Antennenstruktur verhindert werden. Für den Fall der Verwendung organischer Stoffe als leitfähige Materialien wird eine derartige Abdeckfolie auch für den mechanischen Schutz eines aus Polymermaterialien gefertigten Mikrochips benötigt. Im Normalfall wird jedoch im Anschluss an die Strukturierung eine Kartonage mit kleinen Aussparungen auflaminiert. Die normalerweise erreichbare Positionierungsgenauigkeit des Laminiervorgangs von 100 - 200 µm reicht für die Kontaktöffnung völlig aus. Bei vielen Nahrungsmittelverpackungen werden zur Konservierung Laminate verwendet, die metallhaltige Folien bzw. Metallschichten umfassen. Die Metallschicht wirkt dabei als Sauerstoffbarriere und verhindert den raschen Verderb der Nahrungsmittel, deren Inhaltsstoffe sonst durch eindringenden Luftsauerstoff oxidiert würden.

In einer besonders bevorzugten Ausführungsform des erfindungsgemäßen Laminats ist ein Informationsträger vorgesehen, der mit der Antennenstruktur leitend verbunden ist. Auf diesem Informationsträger können verschiedene Informationen über das in der Verpackung enthaltene Produkt gespeichert sein, wie z.B. Produktart, Preis, Herstellungs- und Haltbarkeitsdatum und dergleichen.

Als Informationsträger eignet sich besonders ein speicherfähiger Mikrochip, da die Herstellungstechnologie für diese Art von Bauelement ausgereift ist und die Produktionskosten entsprechend niedrig liegen. Besonders bevorzugt beruht der Mikrochip auf organischen Halbleitermaterialien, da sich derartige Mikrochips kostengünstig herstellen lassen. Natürlich kann auch ein auf der herkömmlichen Silicium-Technologie hergestellter Mikrochip eingesetzt werden.

Für die Verbesserung der elektronischen Eigenschaften ist es vorteilhaft, wenn ein elektronischer Kondensator vorgesehen ist, welcher mit der Antennenstruktur leitend verbunden ist. Der Kondensator verbessert über seinen kapazitiven Effekt das Resonanzverhalten erheblich. Sollte eine zusätzliche Elektrode benötigt werden, so kann diese über die elektrisch leitfähige Schicht geformt werden.

In einer besonders bevorzugten Ausführungsform weist die Antennenstruktur Windungen auf, da bei dieser Geometrieform das Resonanzverhalten am günstigsten ist. Für jede Frequenz existiert eine optimale Windungszahl. Dabei sollte die herstellbare Windungszahl möglichst nahe an dem optimalen Wert liegen, um einen hohen Wirkungsgrad zu erreichen. Der Wirkungsgrad ist dabei umso höher, je größer die umschlossene Fläche ist. Darüberhinaus ist der Wirkungsgrad auch noch von der Größe der Lesespule abhängig. Der Wirkungsgrad sollte optimal gewählt werden, um die Energieeinkopplung der Hochfrequenz hinsichtlich ihrer Effizienz zu optimieren. Je besser die Energieeinkopplung in die Antennenstruktur, desto höher ist der erreichbare Leseabstand und die Lesesicherheit.

Bei der Maximierung der Windungsanzahl ist dabei darauf zu achten, dass die Strukturbreite innerhalb der Antenne nicht zu klein wird, da sonst wegen der ohnehin geringen Schichtdicke eines gängigen Metallaminats sehr hohe Widerstände auftreten, die zu einem nachteiligen elektronischen Verhalten führen.

Andererseits können die durch die geringe Schichtdicke der elektrisch leitfähigen Schicht verursachten hohen Widerstände durch breitere Strukturen ausgeglichen werden.

Das erfindungsgemäße Verfahren verwendet eine Schattenmaske, die auf den Träger, beispielsweise eine Kunststofffolie oder ein Karton, aufgelegt und fixiert wird. Die Schattenmaske weist Öffnungen auf, die der der Antennenstruktur entsprechen. Zum Fixieren kann die Schattenmaske zum Beispiel mit einem Magneten festgehalten werden. Dazu muss die Schattenmaske aus einem magnetisierbaren Material aufgebaut sein. Auf den Träger und die darauf angeordnete Schattenmaske wird nun unmittelbar Aluminium aufgedampft. Nach dem Aufdampfen wird die Schattenmaske mit dem überschüssigen Aluminium abgenommen, sodass nur die gewünschte Antennenstruktur auf dem Abschnitt der Verpackungsfolie zurückbleibt. Das Bedampfen mit Aluminium erfolgt dabei mit bekannten Vorrichtungen, wie sie bereits für die Herstellung von Verpackungsmaterialien bekannt sind. Besonders bevorzugt erfolgt die Abscheidung von Aluminium, durch gerichtete Deposition. Weist die Schattenmaske eine ausreichende Dicke auf, so erfolgt an den Kanten der Aussparungen, welche der Antennenstruktur entsprechen, nur eine unvollständige Abdeckung. Die Schattenmaske kann dann sehr leicht wieder vom Träger abgenommen werden, da die Aluminiumschicht an den Kanten der Schattenmaske sehr leicht durchtrennt werden kann und die Aluminiumschicht daher nicht vom Träger abgehoben wird. Abschließend kann ein Mikrochip mit einem elektrisch leitfähigen Kleber auf die Verpackungsfolie aufgeklebt und mit den Enden der Antennenstruktur verbunden werden. Die Aufkontaktierung des Mikrochips kann auch mit einem nichtleitenden Kleber erfolgen, sofern der Kontakt über entsprechende Brückenstrukturen (Bumps) hergestellt wird.

Bei der Verwendung einer Schattenmaske erfolgt anschließend ein Bedampfen der Folie mit Aluminium bis zu einer ausreichenden Schichtdicke von vorzugsweise 400 nm. Auch in diesem Fall ist die unvollständige Bedeckung der Kanten bei einer gerichteten Deposition der Metallschicht von Vorteil, da die nötige Angriffsfläche für das Spülmedium bereitgestellt wird und die Maske leicht wieder abgelöst werden kann.

Das erfindungsgemäße Laminat ermöglicht eine deutliche Verringerung der Herstellungskosten und lässt sich problemlos durch die bereits in der industriellen Fertigung verwendeten Verfahren herstellen, wobei diese nur geringfügig modifiziert werden müssen. Die Vorteile des erfindungsgemäßen Verfahrens sind im Folgenden noch einmal zusammengefasst:
a) die Kosten einer zusätzlichen Metallisierung, die durch den separaten Aufbau der Antenne entstehen, werden vermieden;
b) die Kosten werden im Wesentlichen auf die Kosten des Chips und die Kosten eines zusätzlichen Verbindungsschritts reduziert, in dem der Chip auf das Laminat aufgeklebt und mit der Antennenstruktur verbunden wird;
c) die Antenne kann an einer beliebigen Stelle auf der Verpackung ausgebildet sein; es können mehrere Antennen auf einer Verpackung vorgesehen sein, wobei für die elektrische Funktion des Transponders nur eine Antenne erforderlich ist; die Antennendichte muss nur der Verpackungsgröße angepasst werden;
d) die Antenne kann sehr groß gestaltet werden, da die gesamte Oberfläche des zu kennzeichnenden Gegenstandes zur Verfügung steht;
e) die Schichtdicke der Metallisierung der Folie ist im Allgemeinen gering, die dadurch entstehenden höheren Widerstände der Antenne können durch breitere Leiterbahnen ausgeglichen werden;
f) beim erfindungsgemäßen Laminat befindet sich unmittelbar hinter der Antenne keine Metallisierung, welche die HF-Eigenschaften des RF-ID-Etiketts verschlechtert, da die Antenne integraler Bestandteil des Laminats ist und nicht auf das Laminat aufgeklebt wird;
g) die Anzahl der Windungen kann innerhalb der zur Verfügung stehenden Fläche beliebig erhöht werden, wodurch die Effizienz der Energiekopplung und damit der Leseabstand bzw. die Lesesicherheit steigt;
h) durch zusätzliche Kapazitäten kann das Resonanzverhalten verbessert werden, wobei eine Elektrode durch das Laminat ausgebildet werden kann.

Um dem Verpackungsmaterial die erforderliche Stabilität zu verleihen, ist die Metallschicht auf einem Träger aufgebracht, der die erforderliche Robustheit aufweist. Geeignet sind beispielsweise Kartonagen für die Herstellung von Getränkeverpackungen oder Kunststofffolien für die Herstellung von Chipstüten.

Die in einem derartigen Laminat enthaltene Metallschicht weist eine ausreichende elektrische Leitfähigkeit auf, um aus dieser Schicht eine Antennenstruktur herstellen zu können. Wesentlicher Bestandteil des erfindungsgemäßen Laminats ist daher das Vorliegen einer Antenne als Bestandteil der elektrisch leitfähigen Schicht, welche es erlaubt Daten und Informationen von einem außerhalb befindlichen Sender oder Empfänger in einen Speicherchip einzuschreiben oder aus diesem auszulesen, der mit der Antennenstruktur verbunden ist.

Das erfindungsgemäße Laminat besteht daher aus einer Trägerschicht, welche zur mechanischen Stabilisierung dient, und einer auf die Trägerschicht aufgebrachten elektrisch leitfähigen Schicht. Die Antennenstruktur ist als Teil dieser elektrisch leitfähigen Schicht ausgebildet. Dabei ist die Anordnung der Antennenstruktur in der elektrisch leitfähigen Schicht an sich keinen Einschränkungen unterworfen. Es kommt hierfür jede beliebige ausreichend große freie Fläche auf der elektrisch leitfähigen Schicht in Frage. Sollte es erforderlich sein und das Platzangebot es erlauben, so können auch mehrere Antennenstrukturen auf der elektrisch leitfähigen Schicht ausgebildet sein. In diesem Fall ist es erforderlich, dass die Antennendichte der Verpackungsgröße angepasst wird. Um die Funktionalität der erzeugten Transponderstruktur zu gewährleisten ist es ausreichend, dass lediglich eine Antennenstruktur mit einem Mikrochip verbunden ist.

Neben der Anzahl der Antennenstrukturen ist auch die Größe der Antenne im Rahmen des Platzbedarfs beliebig, da prinzipiell die gesamte Oberfläche des Laminats bzw. der in diesem enthaltenen elektrisch leitfähigen Schicht zur Verfügung steht.

Für die Herstellung von Verpackungen kann das erfindungsgemäße Laminat in größeren Gebinden, zum Beispiel in aufgerollter Form oder als größere Bögen eines Laminatkartons bereitgestellt werden. Für die Herstellung von Verpackungen werden dann entsprechende Stücke, die jeweils eine oder mehrere Antennenstrukturen umfassen, von der Rolle abgetrennt oder aus einem größeren Karton herausgestanzt und zu einer Verpackung weiterverarbeitet. Für die Herstellung und Befüllung der Verpackungen können die bekannten Vorrichtungen verwendet werden.

Um die elektrisch leitfähige Schicht vor schädigenden Umwelteinflüssen (Kratzern, Verunreinigungen) zu schützen, ist es vorteilhaft, wenn auf der elektrisch leitfähigen Schicht eine Deckschicht aufgebracht ist. Diese Deckschicht kann beispielsweise eine Lackschicht sein oder eine weitere Schicht aus einem Karton. Ebenfalls möglich ist eine Schicht aus einem Kunststoff. Durch die zusätzliche Schicht wird neben dem Schutz vor äußeren Einflüssen auch eine höhere mechanische Stabilität des Laminats erreicht.

Es ist besonders vorteilhaft, wenn die Deckschicht aus einem wasserabweisenden Material besteht, da dadurch zum einen mögliche Korrosionen der elektrisch leitfähigen Schicht verhindert werden und zum anderen das Eindringen wasserlöslicher Verunreinigungen in das Laminat und das Verpackungsinnere ausgeschlossen wird. Besonders bevorzugt wird als Deckschicht eine Schicht aus einem Kunststoff verwendet, wie er zum Beispiel in Getränkeverpackungen, wie Milchtüten, üblich ist. In dieser bevorzugten Ausführungsform umfasst das Laminat daher eine Trägerschicht, z.B. aus Karton, eine elektrisch leitfähige Schicht, z.B. eine Aluminiumschicht, und eine Kunststoffschicht, wobei diese in dieser Reihenfolge aufeinander angeordnet sind. Die elektrisch leitfähige Schicht enthält dabei erfindungsgemäß die Antennenstruktur.

Um die Anwendungsbreite der Erfindung zu erweitern, kann die Deckschicht auch als eine klebende Schicht ausgebildet sein, sodass das Laminat auf ein Objekt, welches mit einer entsprechenden Etikettierung versehen werden soll, wie eine Akte oder ein sonstiges Dokumente, aufgeklebt werden kann. Die klebende Schicht kann auch als separate Schicht ausgebildet sein und z.B. auf der Trägerschicht bzw. auf der Deckschicht aufgebracht sein. Bevorzugt ist jedoch die Ausführungsform als Verpackungsmaterial, wobei das Laminat eine in der Fläche durchgehende elektrisch leitfähige Schicht aufweist, und Abschnitte der elektrisch leitfähigen Schicht zu einer Antennenstruktur ausgebildet sind.

Um die Enden der Antenne mit dem Mikrochip verbinden zu können muss bei der als Antenne verwendeten Spule entweder das Ende in der Mitte nach Außen oder das äußere Ende nach Innen geführt werden. Dazu wird eine Brückenstruktur benötigt, mit der das Spulenende über die Windungen geführt wird.

Vorteilhaft können dazu elektrisch leitfähige organische Materialien, wie mit Camphersulfonsäure dotiertem Polyanilin oder mit Polystyrolsulfonsäure dotiertes Poly(ethylendioxy)-thiophen verwendet werden, da die Brückenstruktur in diesem Fall sehr einfach durch Drucktechniken hergestellt werden kann.

Es ist vorteilhaft, wenn die Trägerschicht aus einem papierartigen Material aufgebaut ist, da Papier ein geringes Gewicht aufweist und dennoch dem Laminat eine ausreichende Stabilität und Festigkeit verleiht.

Papierartige Materialien sind alle Stoffe, die Cellulose als Grundbestandteil enthalten, also neben Papier auch Pappe, Pappmaché, Karton, Holz etc.

Auch die Verwendung eines Polymeren als Trägermaterial ist bevorzugt. Unter Polymeren sind dabei neben den synthetisch herstellbaren Kunstoffen mit einer breiten Palette von Materialeigenschaften auch natürlich vorkommende Polymere wie z.B. Seide, Naturfaser, Baumwolle etc. zu verstehen. Insbesondere synthetische Polymere haben ein sehr geringes spezifisches Gewicht, sind mechanisch extrem belastbar und kostengünstig herzustellen.

Denkbar ist auch eine Mischung aus einem papierartigen Material und einem Polymer, um die Vorteile der beiden Stoffgattungen zu kombinieren.

Für die Verwendung als Trägermaterial ist wesentlich, dass die eingesetzten Verbindungen gute dielektrische Eigenschaften aufweisen, um eine ausreichende Isolation der aufgebrachten leitfähigen Strukturen zu gewährleisten.

Besonders vorteilhaft ist es, wenn das Laminat zu einer Verpackung geformt ist, welche einen Hohlraum umschließt. Dadurch können Güter verschiedenster Art innerhalb des Hohlraumes eingeschlossen und transportiert werden. Das Laminat dient in diesem Fall als Verpackung und als Speichermedium für Daten über das verpackte Gut, z.B. dessen Herstelldatum oder dessen Preis. Auf der Außenseite kann die Verpackung auch einen dekorativen Aufdruck tragen, z.B. den Produktnamen. Hier bestehen keine Einschränkungen im Vergleich zu den bekannten Verpackungen. Die Herstellung der Verpackung und deren Befüllung erfolgt nach bekannten Verfahren und mit bekannten Vorrichtungen. Ein spezieller Umbau dieser Vorrichtungen ist daher nicht erforderlich.

Die Erfindung wird unter Bezugnahme auf die beigefügten Figuren näher erläutert, dabei zeigt:
Fig. 1: Ein Radiofrequenz-Identifikationsetikett nach dem Stand der Technik;
Fig. 2: eine vergrößerte Ansicht einer Schattenmaske für die Herstellung einer Antennenstruktur;
Fig. 3: eine Verpackung, die durch das erfindungsgemäße Verfahren hergestellt wurde.

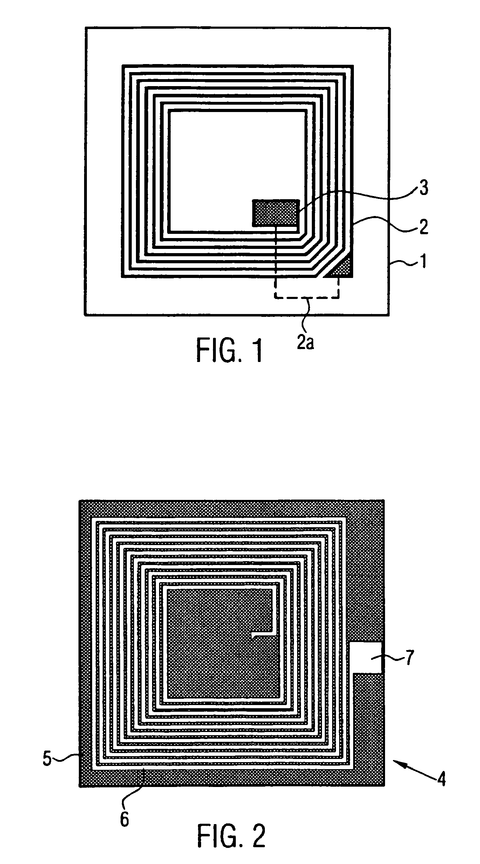

Fig. 1 zeigt ein Radiofrequenz-Identifikationsetikett nach dem Stand der Technik. Auf einer flexiblen Folie 1, die als Trägerschicht dient, ist eine aus mehreren Windungen aufgebaute Antennenstruktur 2 aufgebracht. Die Enden der Antennenstruktur 2 sind leitend mit einem Silizium-Mikrochip 3 verbunden. Die beiden Enden der Antennenstruktur sind über eine Brückenstruktur 2a miteinander verbunden. Die Trägerschicht 1 kann auf ihrer Rückseite mit einer Kleberschicht versehen sein, um das Etikett auf einem zu kennzeichnenden Gegenstand, beispielsweise einer Akte, befestigen zu können. Die Antennenstruktur 2 wird zunächst getrennt hergestellt und anschließend auf der Folie 1 fixiert. Die Herstellung eines solchen Etiketts ist daher aufwändig.

In Fig. 2 ist eine Schattenmaske 4 dargestellt, die zur Herstellung der Antennestruktur im erfindungsgemäßen Laminat verwendet werden kann. Die Schattenmaske 4 umfasst abgeschattete Bereiche 5, die in der Figur schwarz dargestellt sind. In die Schattenmaske ist weiter eine weiß dargestellte spiralförmige Öffnung 6 eingebracht. Die Öffnung 6 entspricht den darzustellenden Windungen der Antenne. Die Schattenmaske stellt also eine Negativstruktur der herzustellenden Antenne dar. Verpackungsfolien werden im Rolle-zu-Rolle Verfahren aus der Gasphase beispielsweise mit Aluminium bedampft. In diesem Fall wird an vorher festgelegten Stellen die Schattenmaske 4 auf die Folie aufgelegt. Besteht die Schattenmaske aus einem magnetisierbaren Material, kann die Schattenmaske beispielsweise magnetisch auf der Folie festgehalten werden. Die Folie wird nun auf ihrer gesamten Oberfläche mit Aluminium bedampft, wobei die durch die dunklen Abschnitte 5 der Schattenmaske 4 abgeschatteten Bereiche frei von Aluminium bleiben. Nach dem Bedampfen mit Aluminium wird die Schattenmaske 4 wieder von der Oberfläche der Folie abgenommen. Abschließend kann auf der quadratischen Elektrodenfläche 7 ein Mikrochip mit Hilfe eines leitfähigen Klebers aufgeklebt werden.

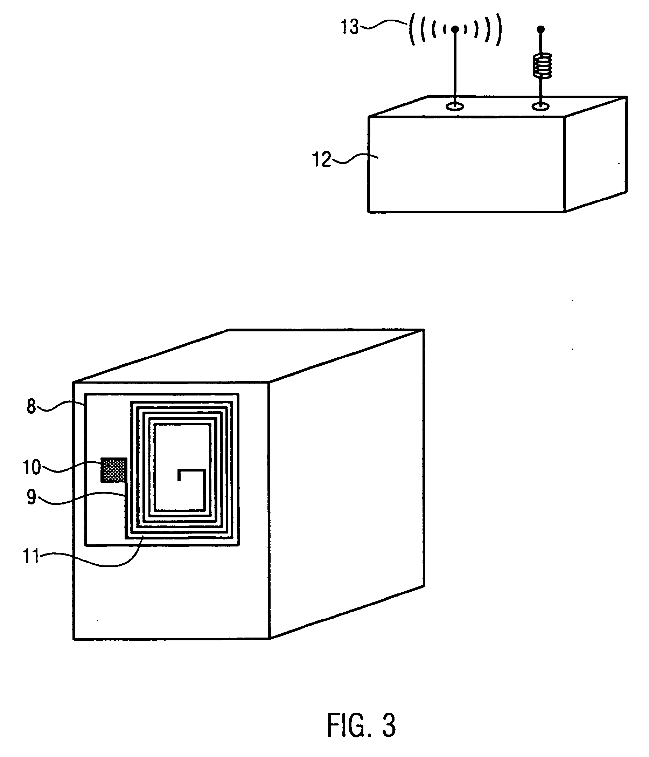

Fig. 3 zeigt eine Anwendung des durch das erfindungsgemäße Verfahren hergestellten Laminats. Das Laminat umfasst eine durchgehende Schicht aus Aluminium, die auf der einen Seite von einer Kartonschicht und auf der gegenüberliegenden Seite von einer Kunststoffschicht abgedeckt ist. In der Aluminiumschicht ist eine Fläche 8 vorgesehen, in der aus der Aluminiumschicht eine Antennenstruktur 9 ausgebildet wurde. Die Antennenstruktur 9 ist mit einem Mikrochip 10 verbunden, auf dem z.B. Herstellungsdatum, Haltbarkeitsdatum und Preis des in der Verpackung enthaltenden Konsumartikels gespeichert sind. Der Zwischenraum 11 zwischen den Windungen der Antennenstruktur 9 und zwischen Antennenstruktur 9 und der diese umgebenden Aluminiumschicht ist mit einem sauerstoffundurchlässigen Kunststoff aufgefüllt. Dazu kann auf der Antennenstruktur eine Folie (nicht dargestellt) aus einem sauerstoffundurchlässigen Material aufgeklebt werden. Über eine Sende- und Empfangsanlage 12 können durch elektromagnetische Strahlung 13 Daten über die mit dem Mikrochip 10 leitend verbundene Antennenstruktur 9 berührungslos vom Mikrochip 10 ausgelesen oder in diesen eingelesen werden. Die Sende- und Empfangsanlage 12 kann zum Beispiel mit der Kasse eines Supermarktes verbunden sein, um die Daten aus dem Mikrochip auszulesen. Sie kann aber auch an einer Produktionsstrasse angebracht sein und dort z.B. Daten über das Herstellungsdatum, die Art der Ware oder den Preis auf den Mikrochip 10 einlesen.

## Patentansprüche

1. Verfahren zur Herstellung einer Verpackung in Form eines Laminats mit folgenden Schritten:
- Auflegen einer Schattenmaske auf eine Trägerschicht;
- Aufdampfen von Aluminium auf die Trägerschicht;
- Abnehmen der Schattenmaske mit dem überschüssigen Aluminium von der Trägerschicht, sodass nur die gewünschte Antennenstruktur auf dem Abschnitt der Trägerschicht zurückbleibt;
- Aufkleben eines Mikrochip mit einem Kleber;
- Verbinden des Mikrochips mit den Enden der Antennenstruktur verbunden

2. Verfahren nach Anspruch 1, wobei Aluminium bis zu einer Schichtdicke von bis zu 400 nm aufgedampft wird.

3. Verfahren nach einem der vorhergehenden Ansprüche, wobei die Trägerschicht aus einem papierartigen Material aufgebaut ist.

4. Verfahren nach einem der vorhergehenden Ansprüche, wobei die Trägerschicht aus einem Polymer aufgebaut ist.

5. Verfahren nach Anspruch 4, wobei das Polymer aus unpolaren Kohlenwasserstoffmonomeren aufgebaut ist.

6. Verfahren nach einem der vorhergehenden Ansprüche, wobei die Schattenmaske auf den Träger aufgedruckt wird.

7. Verfahren nach einem der vorhergehenden Ansprüche, wobei der Mikrochip mit den Enden der Antennenstruktur leitend verbunden ist.

8. Verfahren nach einem der vorhergehenden Ansprüche, wobei das Laminat zumindest abschnittsweise eine Schicht aus einem sauerstoffundurchlässigen Material umfasst.

9. Verfahren nach einem der vorhergehenden Ansprüche, wobei die Verpackung einen Hohlraum umschließt, zumindest ein Nahrungsmittel enthält.

10. Verfahren nach einem der vorhergehenden Ansprüche, wobei ein elektronischer Kondensator vorgesehen ist, der mit der Antennenstruktur leitend verbunden ist.

## Claims

1. Method for producing a package in the form of a laminate, having the following steps:
- application of a shadow mask to a carrier layer;
- vapour-deposition of aluminium onto the carrier layer;
- removal of the shadow mask with the excess aluminium from the carrier layer, so that only the desired antenna structure remains on the section of the carrier layer;
- adhesive-bonding of a microchip with an adhesive;
- connection of the microchip to the ends of the antenna structure.

2. Method according to Claim 1, aluminium being vapour-deposited to a layer thickness of up to 400 nm.

3. Method according to one of the preceding claims, the carrier layer being built up from a paper-like material.

4. Method according to one of the preceding claims, the carrier layer being built up from a polymer.

5. Method according to Claim 4, the polymer being built up from non-polar hydrocarbon monomers.

6. Method according to one of the preceding claims, the shadow mask being printed onto the carrier.

7. Method according to one of the preceding claims, the microchip being conductively connected to the ends of the antenna structure.

8. Method according to one of the preceding claims, the laminate comprising, at least in some sections, a layer of an oxygen-impermeable material.

9. Method according to one of the preceding claims, the package enclosing a hollow space, containing at least one foodstuff.

10. Method according to one of the preceding claims, an electronic capacitor being provided which is conductively connected to the antenna structure.

## Revendications

1. Procédé de production d'un emballage sous la forme d'un stratifié ayant les stades suivants :
- on applique un masque sur une couche servant de support ;
- on dépose de l'aluminium en phase vapeur sur la couche servant de support ;
- on retire le masque ayant l'aluminium en excès de la couche servant de support de manière à ne laisser subsister que la structure d'antenne souhaitée sur la partie de la couche support ;
- on colle une micropuce avec une colle ;
- on relie la micropuce aux extrémités de la structure d'antenne.

2. Procédé suivant la revendication 1, dans lequel on dépose de l'aluminium en phase vapeur jusqu'à une épaisseur de couche allant jusqu'à 400 nm.

3. Procédé suivant l'une des revendications précédentes, dans lequel la couche servant de support est en un matériau du type papier.

4. Procédé suivant l'une des revendications précédentes, dans lequel la couche servant de support est en un polymère.

5. Procédé suivant la revendication 4, dans lequel le polymère est constitué de monomère hydrocarboné non polaire.

6. Procédé suivant l'une des revendications précédentes, dans lequel le masque est imprimé sur le support.

7. Procédé suivant l'une des revendications précédentes, dans lequel la micropuce est reliée d'une manière conductrice aux extrémités de la structure d'antenne.

8. Procédé suivant l'une des revendications précédentes, dans lequel le stratifié comprend au moins par parties une couche en une matière imperméable à l'oxygène.

9. Procédé suivant l'une des revendications précédentes, dans lequel l'emballage comprend une cavité qui contient au moins une denrée alimentaire.

10. Procédé suivant l'une des revendications précédentes, dans lequel il est prévu un condensateur électronique qui est relié d'une manière conductrice à la structure d'antenne.
